# EUROPÄISCHE PATENTANMELDUNG

(11) **EP 1 225 297 A1**
(43) Veröffentlichungstag der Anmeldung: **24.07.2002**
(21) Anmeldenummer: 01101249.9
(22) Anmeldetag: 19.01.2001
(51) Int. Cl.: E06B 3/26, E06B 3/66

(54) **Fensterkonstruktion und Fensterrahmen**

(71) Anmelder: DFS Technology & Service AG, 9050 Appenzell (CH)
(72) Erfinder: Schlumpf, Adrian, 7320 Sargans (CH); Beimler, Albert, 9305 Berg (SG) (CH)
(74) Vertreter: Hepp, Dieter

(57) **Zusammenfassung**

Die Erfindung betrifft eine Fensterkonstruktion mit einem Fensterrahmen (1) aus Metall- bzw. Kunststoffprofilen (10,11), wobei der Fensterrahmen (1) mindestens eine Armierung aus Metallschaum und mindestens eine Dämmung aus Aerogel aufweist. Die Fensterkonstruktion umfasst mindestens zwei im Abstand zueinander angeordnete Isoliergläser (20,20',21,21'). Diese Isoliergläser (20,20',21,21') umschliessen einen Raum (24,25) und bilden eine Fensterscheibeneinheit (2,2'). Die Isoliergläser (20,20',21,21') sind im Bereich dieses Raumes (24,25) über Abstandshalter (22) zueinander beabstandet. Der Raum (24,25) ist evakuiert und an einem Randverbund (200,201) der Isoliergläser (20,20',21,21') mit einem Dichtmittel, bevorzugt einem Dichtlot, abgedichtet. Mindestens zwei Fensterscheibeneinheiten (2,2') sind im Abstand zueinander angeordnet. Der Raum (26) zwischen den Fensterscheibeneinheiten (2,2') is evakuiert oder mit Gas gefüllt.

## Beschreibung

Die Erfindung betrifft eine Fensterkonstruktion und einen Fensterrahmen gemäss der Definition der Patentansprüche. Des weiteren betrifft die Erfindung ein Verfahren zum Herstellen einer Fensterkonstruktion und eines Fensterrahmens gemäss der Definition der Patentansprüche.

Im wichtigen Bereich des Wärmeschutzes befindet sich das geltende Regelwerk in einem starken Umbruch. Zukünftig wird ein europäisches Regelwerk massgebend sein, welches die Umsetzung der Energiesparverordnung (EnEV) 2000 verlangt. Für den Glaser, Fensterbauer und Hersteller von Isolationsplatten ist dieser Umbruch wichtig, weil die Anforderungen an die Wärmedämmung von Gebäuden steigen werden.

Aufgabe der vorliegenden Erfindung ist es, den Wärmeschutz einer Fensterkonstruktion bzw. eines Fensterrahmens zu verbessern.

Diese Aufgaben werden durch die Erfindung gemäss der Definition der Patentansprüche gelöst.

Die Erfindung besteht darin, einen verbesserten Wärmeschutz in einer Fensterkonstruktion und einem Fensterrahmen durch das Einbringen von Materialien mit tiefer Wärmeleitzahl bzw. durch konstruktive Massnahmen zu erzielen.

Gemäss einem ersten Aspekt der Erfindung umfasst eine Fensterkonstruktion einen Fensterrahmen aus Metall- bzw. Kunststoffprofilen. Der Fensterrahmen weist mindestens eine Armierung aus Metallschaum und mindestens eine Dämmung aus Aerogel auf. Als Ersatz von Metallschaum bzw. zusätzlich zu Metallschaum lässt sich auch glasfaserverstärkter Kunststoff (GFK) als Armierung verwenden. Die Eigenschaften von Metallschaum und GFK wie geringes Gewicht, hohe Elastizität und gute Rezyklierbarkeit prädestinieren GFK und Metallschaum für den Fensterbau. Aerogel ist ein hochporöser Festkörper. Zum Erreichen eines guten Dämmwertes ist das Aerogel dicht im Fensterrahmen gepackt. Je nach Dichte der Pakkung variert die Wärmeleitzahl des Aerogels vorteilhafterweise in einem Bereich von 0,016 bis 0,020 W/mK. Bei einem Hohlraum mit einer Dicke von beispielsweise 20 mm resultiert ein Wärmedurchgangskoeffizient im Bereich von 0,9 bis 0,7 W/m²K.

Gemäss einem weiteren Aspekt der Erfindung umfasst eine Fensterkonstruktion mindestens zwei, im Abstand zueinander angeordneten Isoliergläser. Zwei Isoliergläser umschliessen einen Raum und bilden eine Fensterscheibeneinheit. Diese zwei Isoliergläser sind im Bereich dieses Raumes über Abstandshalter zueinander beabstandet. Dieser Raum ist evakuiert und an einem Randverbund dieser Isoliergläser mit einem Dichtmittel, bevorzugt einem Dichtlot, abgedichtet. Die Fensterkonstruktion kennzeichnet sich durch mindestens zwei, im Abstand zueinander angeordnete Fensterscheibeneinheiten aus. Ein Raum zwischen den Fensterscheibeneinheiten ist evakuiert oder mit Gas, beispielsweise mit Luft, Stickstoff, bevorzugt mit Edelgas gefüllt. Der Wärmedurchgangskoeffizient dieser Fensterkonstruktion ist besonders niedrig und kleiner/gleich 0,5 W/m²K, bevorzugt kleiner/gleich 0,3 W/m²K.

Gemäss einem weiteren Aspekt der Erfindung umfasst eine Fensterkonstruktion mindestens eine Isolationsplatte aus Aerogel. Das Aerogel ist in mindestens einer Folie vakuumverpackt. Die Isolationsplatte weist eine Wärmeleitzahl kleiner/gleich 0,0080 W/mK, bevorzugt kleiner/gleich 0,0060 W/mK, bevorzugt kleiner/gleich 0,0045 W/mK auf.

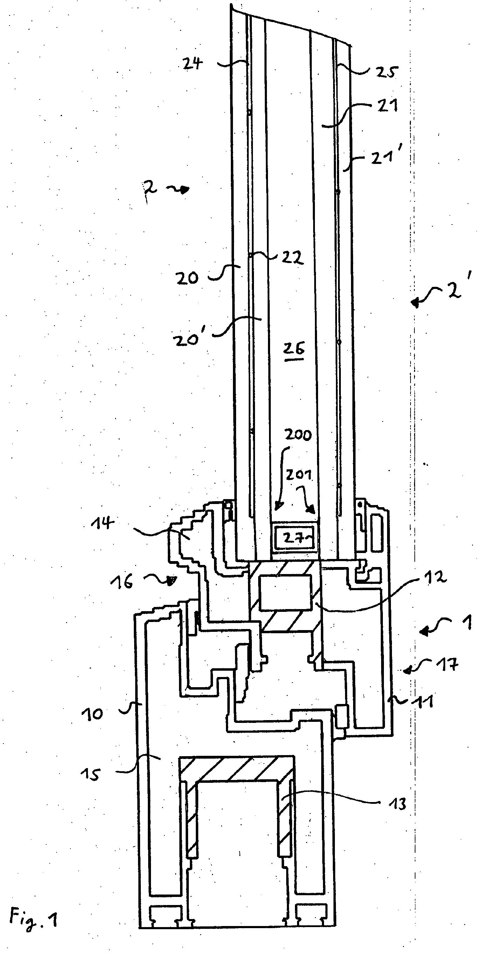

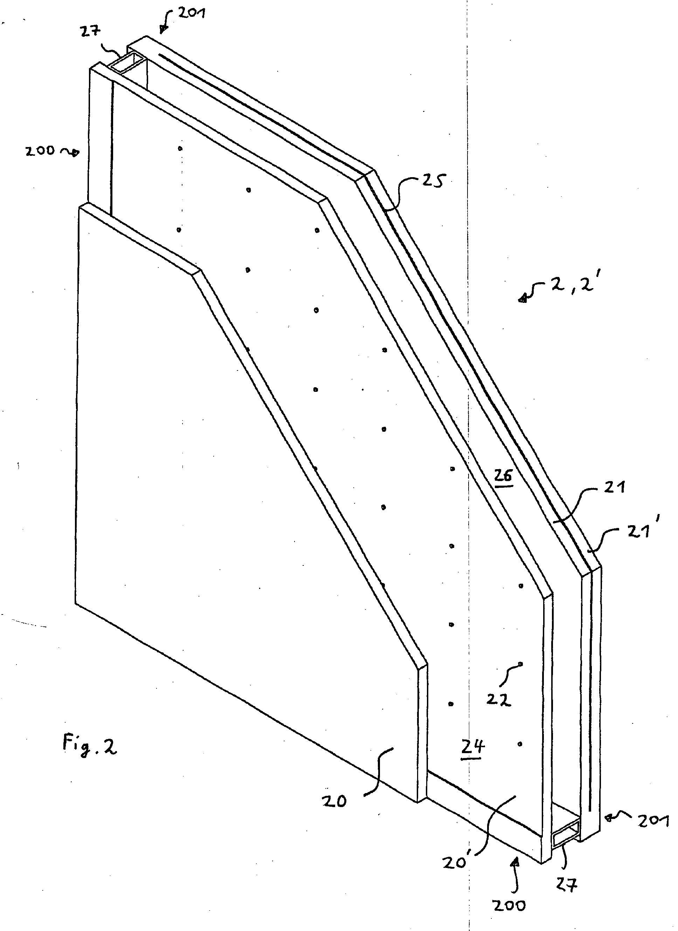

Im folgenden wird die Erfindung anhand der Fig. 1 und 2 im Detail erläutert. Hierbei zeigt
- Fig. 1: einen Querschnitt durch einen Teil einer beispielhaften Ausführungsform einer Fensterkonstruktion und
- Fig. 2: eine perspektivische Sicht eines Teils einer beispielhaften Ausführungsform einer Fensterkonstruktion mit zwei Fensterscheibeneinheiten.

Fig. 1 zeigt einen Querschnitt durch einen Teil einer beispielhaften Ausführungsform einer Fensterkonstruktion mit einem starren Fensterrahmen 1 aus Metall- bzw. Kunststoffprofilen. Gemäss Fig. 1 besteht der Fensterrahmen 1 aus einem Innenprofil 11, das mit einem Aussenprofil 10 verbunden ist. Vorteilhafterweise erfolgt diese Verbindung über bekannte form- bzw. kraftschlüssige Mittel. Die Fensterkonstruktion ist über das Aussenprofil 10 an einer Gebäudewandung befestigt. Das Innenprofil 11 trägt mindestens eine Fensterscheibeneinheit 2, 2'. Zum Öffnen/Schliessen der Fensterkonstruktion wird das Innenprofil 11 relativ zum Aussenprofil 10 bewegt. Das Innenprofil 11 und Aussenprofil 10 bestehen aus bekannten und bewährten Metallen bzw. Kunststoffen wie Aluminium (Al), Aluminiumlegierungen, Polyurethan (PUR), Polyvinylchlorid (PVC), glasfaserverstärktem Kunststoff (GFK), usw.. Das Innenprofil 11 und Aussenprofil 10 sind ein- bzw. mehrteilig ausgeführt.

Der Fensterrahmen 1 weist mindestens eine Armierung 12, 13 aus Metallschaum auf. Metallschaum wie beispielsweise Aluminiumschaum verbindet hohe Stabilität mit geringem Gewicht. Ein Aluminiumpulver und ein Treibmittel werden in einem Kompaktierverfahren verdichtet und auf Zersetzungstemperatur des Treibmittels erwärmt, wobei Gase freigesetzt werden und sich ein weiterverarbeitbarer Aluminiumschaum ergibt. Der Aluminiumschaum lässt sich in Formen füllen. Vorteilhafterweise wird Aluminiumschaum als Platten- bzw. Stabmaterial hergestellt. Andere Formen sind möglich. Durch Abkühlung stoppt man das Aufschäumen. Die Aluminiumschaum-Formen sind durch Kleben, Schweissen, Schrauben, usw. gut zu bearbeiten und zu fügen. Mit einem spezifischen Gewicht von beispielsweise 0,32 g/cm³ ist Aluminiumschaum rund 8% leichter als Aluminium. Mit einem E-Modul von beispielsweise 4000 MPa ist Aluminiumschaum rund 450% biegesteifer als Aluminium bzw. 3600% biegesteifer wie Stahlblech desselben Gewichtes. Aluminiumschaum weist eine Wärmeleitzahl (λ-Wert) von beispielsweise 8 bis 14 W/mK auf. Aluminiumschaum weist eine gute Schalldämmung und Stossabsorption auf. Ferner verfügt Aluminiumschaum über ein exzellentes Rezyklingpotential.

Als Ersatz von Metallschaum bzw. zusätzlich zu Metallschaum lässt sich auch glasfaserverstärkter Kunststoff (GFK) als Armierung 12, 13 verwenden. Die Armierung kann zumindestens teilweise aus GFK bestehen. Die Eigenschaften von GFK wie ein geringes spezifisches Gewischt von beispielsweise 1,5 bis 2,0 g/cm³, eine über den Faseranteil und die Lage der Fasern einstellbare Elastizität mit einem E-Modul von beispielsweise 25000 bis 30000 MPa, die tiefe Wärmeleitzahl (λ-Wert) von beispielsweise 0,2 W/mK, die über den Faseranteil und die Lage der Fasern einstellbare Ausreissfestigkeit von beispielsweise 5500 bis 6800 N sowie das stabile Verhalten unter wechselnden Temperaturen und die gute Rezyklierbarkeit prädestinieren GFK für den Fensterbau.

In einer ersten vorteilhaften Ausführungsform ist die Armierung 12, 13 als längliches Profil hergestellt und in mindestens einen entsprechenden Hohlraum des Fensterrahmens 1 eingeschoben. Die Armierung 12, 13 wird vorteilhafterweise in dem Hohlraum fixiert, beispielsweise durch Form-, Stoff- bzw. Kraftschluss. Bevorzugt wird die Armierung 12, 13 im Hohlraum verklebt. In einer weiteren vorteilhaften Ausführungsform ist die Armierung 12, 13 mit mindestens einem Rahmenprofil koextrudiert. Gemäss Fig. 1 ist eine erste Armierung 12 in einem ersten Hohlraum im Innenprofil 11 und eine zweite Armierung 13 in einem zweiten Hohlraum im Aussenprofil 10 angeordnet. Vorteilhafterweise besteht das Innenprofil 11 aus zwei Halbschalen 16, 17, welche Halbschalen 16, 17 über aufgerauhte Kontaktflächen an die erste Armierung 12 anextrudiert werden.

Der Fensterrahmen 1 weist mindestens eine Dämmung aus Aerogel auf. Aerogel ist ein hochporöser Festkörper, der zumindestens teilweise aus Siliziumoxiden besteht. Als Rohstoff zur Aerosol-Herstellung dient Sand, speziell Kieselsäure. Aerosol ist bis 1000 °C feuerbeständig, ungiftig und bei Atmosphärendruck druckfest. Die Dichte von Aerogel liegt im Bereich von 70 bis 300 kg/m³. Die Partikelgrösse beträgt typischerweise 1 mm. Die Porengrösse liegt im Bereich von 10 bis 100 nm und ist vorteilhafterweise kleiner als die mittlere freie Weglänge von Luftmolekülen. Zum Erreichen eines guten Dämmwertes, ist das Aerogel dicht gepackt.

In einer ersten vorteilhaften Ausführungsform ist das Aerogel in mindestens einen Hohlraum 14, 15 des Fensterrahmens 1 eingeblasen. Der Hohlraum 14, 15 erstreckt sich vorteilhafterweise über die gesamte Länge des Fensterrahmens und hat eine beliebige, beispielsweise längliche Form. Je nach Dichte der Packung variert die Wärmeleitzahl (λ-Wert) des Aerogels vorteilhafterweise in einem Bereich von 0,016 bis 0,020 W/mK. Bei einem Hohlraum mit einer Dicke von beispielsweise 20 mm resultiert ein Wärmedurchgangskoeffizient (k-Wert) im Bereich von 0,9 bis 0,7 W/m²K.

In einer weiteren vorteilhaften Ausführungsform weist die Dämmung aus Aerogel die Form einer Isolationsplatte (Paneel) auf. Hierzu wird das Aerogel in mindestens einer Folie dicht vakuumverpackt. Die Folie besteht vorteilhafterweise aus metallverstärktem Kunststoff, bevorzugt aus mehrlagigem, mit Aluminium (Al) verstärkter Folie aus Polyurethan (PUR), Polyvinylchlorid (PVC), usw.. Das Aerogel wird in eine solche Folie gepackt, die Folie wird daraufhin evakuiert und die mit Aerogel gefüllte und evakuierte Folie wird verschweisst. Eine solche vakuumisolierte Isolationsplatte weist bei einem vorteilhaften Unterdruck von 1 mbar eine vorteilhafte Wärmeleitzahl (λ-Wert) von kleiner/gleich 0,008 W/mK, bevorzugt kleiner/gleich 0,006 W/mK, bevorzugt kleiner/gleich 0,0045 W/mK auf. Bei einer Isolationsplatte mit einer Dicke von beispielsweise 20 mm resultiert ein Wärmedurchgangskoeffizient (k-Wert) von kleiner/gleich 0,04 W/m²K, bevorzugt kleiner/gleich 0,03 W/m²K, bevorzugt kleiner/gleich 0,023 W/m²K. Die Grösse der Isolationsplatte ist frei wählbar. In einer ersten vorteilhaften Ausführungsform ist die Isolationsplatte von der Grösse einer Fensterscheibeneinheit, so dass sie sich anstatt einer Fensterscheibeneinheit in einen Fensterrahmen montieren lässt. In einer weiteren vorteilhaften Ausführungsform ist die Isolationsplatte von der Grösse einer Fensterkonstruktion, so dass sie sich anstatt einer Fensterkonstruktion direkt in einer Gebäudewandung montieren lässt. Die Isolationsplatte lässt sich somit mit einem Rahmen oder ohne Rahmen (rahmenlos) in einer Gebäudewandung montieren. Prinzipiell lässt sich die Isolationsplatte auch als Gebäudewand bzw. als Trennwand im Inneren von Gebäuden verwenden. Dabei kann die Isolationsplatte in Gebäudewänden bzw. Trennwänden integriert, beispielsweise teilweise von Wandmaterial umgeben (eingebaut) sein.

Die mindestens eine Fensterscheibeneinheit 2, 2' weist zwei Isoliergläser 20, 20', 21, 21' auf. Zwei Isoliergläser 20, 20', 21, 21' einer Fensterscheibeneinheit 2, 2' sind mit ihrer länglichen Ausdehnung parallel zueinander angeordnet und bilden an ihren Rändern einen Glasverbund 200, 201. Im Bereich des Glasverbundes 200, 201 liegen Isoliergläser 20, 20', 21, 21' aufeinander und umschliessen mit dem Glasverbund 200, 201 vollständig einen Raum 24, 25.

Der Raum 24, 25 zwischen den Isoliergläsern 20, 20', 21, 21' erstreckt sich quasi über die gesamte längliche Ausdehnung der Isoliergläser 20, 20', 21, 21' und ist vorteilhafterweise von gleichmässiger Tiefe. Dieser Raum 24, 25 wird mit bekannten und bewährten Verfahren als Vertiefung in einem oder in beiden der Isoliergläser 20, 20', 21, 21' hergestellt, beispielsweise durch Schleifen oder Ätzen. Vorteilhafterweise ist dieser Raum 1 mm, bevorzugt 0,4 mm tief.

Der Raum 24, 25 zwischen den Isoliergläsern 20, 20', 21, 21' ist evakuiert. Beispielsweise herrscht in diesem Raum 24, 25 ein Unterdruck kleiner 1 mbar, bevorzugt kleiner 10⁻² mbar. Damit die Isoliergläser 20, 20', 21, 21' unter der Kraft des Luftdrucks im Bereich des Raumes 24, 25 nicht in den Raum 24, 25 gedrückt werden, sind im Bereich des Raumes 24, 25 Abstandshalter 22 vorgesehen, welche die Isoliergläser 20, 20', 21, 21' zueinander beabstanden. Vorteilhafterweise sind die Abstandshalter 22 kugelförmig und aus durchsichtigem Glas oder Kunststoff. Alle bekannten und bewährten durchsichtigen Gläser und Kunststoffe lassen sich verwenden. Die Verwendung von kugelförmigen Abstandshaltern ist nicht zwingend. Bei Kenntnis der Erfindung lassen sich auch zylinder- bzw. polyederförmige Abstandshalter einsetzen. Die Abstandshalter 22 sind vorteilhafterweise in einem regelmässigen Abstand zueinander im Raum 24, 25 angeordnet. Die Abstandshalter haben eine Durchmesser, welcher der Tiefe des Raumes 24, 25 entspricht. Vorteilhafterweise haben die Abstandshalter 22 einen Durchmesser von 1 mm, bevorzugt 0,4 mm.

Der Raum 24, 25 zwischen den Isoliergläsern 20, 20', 21, 21' ist mit einem Dichtmittel gasdicht abgedichtet. Vorteilhafterweise wird als Dichtmittel Glaslot verwendet, das aussenseitig am Glasverbund 200, 201 angebracht ist.

Die Isoliergläser 20, 20', 21, 21' sind mit einer low-e Beschichtung versehen. Unter der Abkürzung low-e werden Begriffe wie low emissivity (niedrige Emissivität der Wärmeschutzverglasung), low energy (sparsamer Energieverbrauch) und low emission (niedrige Schadstoffemission) subsummiert. Die Isoliergläser 20, 20', 21, 21' sind mit einer durchsichtigen Beschichtung versehen, welche von der Sonne kommendes kurzwelliges Licht absorbiert und als langwelliges Licht in das Innere des Gebäudes abstrahlt bzw. langwelliges Licht aus dem Inneren des Gebäudes zurück ins Innere des Gebäudes reflektiert. Die low-e Beschichtung ist beispielsweise auf die Isoliergläser 20, 20', 21, 21' aufgesputtert. Vorteilhafterweise weist die low-e Beschichtung einen Emissionsgrad ε=0.035 auf.

Die Dicke jedes der Isoliergläser 20, 20', 21, 21' ist vorteilhafterweise kleiner/gleich 6 mm, bevorzugt kleiner/gleich 4 mm. Bei 4 mm dicken Isoliergläsern 20, 20', 21, 21' und einem 0,4 mm tiefen Raum 24, 25 ist die Fensterscheibeneinheit 2, 2' vorteilhafterweise 8,4 mm dick. Eine solche Fensterscheibeneinheit 2, 2' weist einen Wärmedurchgangskoeffizienten (k-Wert) kleiner/gleich 0,7 W/m²K, bevorzugt kleiner/gleich 0,5 W/m²K auf. Auch weist eine solche Fensterscheibeneinheit 2, 2' ein Schalldämmmass von 40 dB, bevorzugt 36 dB auf.

Gemäss Fig. 1 und 2 sind zwei Fensterscheibeneinheiten 2, 2' miteinander zu einer Verglasung verbunden. Die Fensterscheibeneinheiten 2, 2' sind mit ihrer länglichen Ausdehnung parallel zueinander angeordnet und über ein zwischen ihnen liegendes Abstandsprofil 27 miteinander verbunden. Das Abstandsprofil 27 besteht aus bekannten und bewährten Metallen bzw. Kunststoffen wie Aluminium (Al), Aluminiumlegierungen, Edel- bzw. Chromstahl, Polyurethan (PUR), glasfaserverstärktem Kunststoff (GFK), usw.. Zwei Fensterscheibeneinheiten 2, 2' und ein Abstandsprofil 27 umschliessen vollständig und gasdicht einen Raum 26. Der Raum 26 zwischen den Fensterscheibeneinheiten 2, 2' ist evakuiert oder mit Gas, beispielsweise mit Luft, Stickstoff, bevorzugt mit Edelgas wie Argon (Ar), Krypton (Kr), usw. gefüllt. Die Dicke dieser Verglasung ist vorteilhafterweise kleiner 40 mm, bevorzugt kleiner 30 mm. Diese Verglasung weist einen Wärmedurchgangskoeffizienten (k-Wert) kleiner/gleich 0,5 W/m²K, bevorzugt kleiner/gleich 0,3 W/m²K auf. Auch weist eine solche Verglasung ein Schalldämmass von 50 dB, bevorzugt 44 dB auf. Prinzipiell lassen sich auch mehr zwei, beispielsweise drei Fensterscheibeneinheiten miteinander zu einer Verglasung verbinden.

## Patentansprüche

1. Fensterkonstruktion mit einem Fensterrahmen (1) aus Metallbzw. Kunststoffprofilen (10, 11), **dadurch gekennzeichnet, dass** der Fensterrahmen (1) mindestens eine Armierung (12, 13) aus Metallschaum aufweist und/oder dass der Fensterrahmen (1) mindestens eine Dämmung aus Aerogel aufweist.

2. Fensterkonstruktion gemäss Anspruch 1, **dadurch gekennzeichnet, dass** die Armierung (12, 13) zumindestens teilweise aus glasfaserverstärktem Kunststoff besteht.

3. Fensterkonstruktion mit mindestens zwei, im Abstand zueinander angeordneten Isoliergläsern (20, 20', 21, 21'), zwei Isoliergläser (20, 20', 21, 21') umschliessen einen Raum (24, 25) und bilden eine Fensterscheibeneinheit (2, 2'),'), diese zwei Isoliergläser (20, 20', 21, 21')sind im Bereich dieses Raumes (24, 25) über Abstandshalter (22) zueinander beabstandet, dieser Raum (24, 25) ist evakuiert und an einem Randverbund (200, 201) der Isoliergläser (20, 20', 21, 21') mit einem Dichtmittel, bevorzugt einem Dichtlot abgedichtet, **dadurch gekennzeichnet, dass** die Fensterkonstruktion mindestens zwei, im Abstand zueinander angeordnete Fensterscheibeneinheiten (2, 2') aufweist und dass ein Raum (26) zwischen den Fensterscheibeneinheiten (2, 2') evakuiert oder mit Gas gefüllt ist.

4. Fensterkonstruktion gemäss einem der Ansprüche 1 bis 3, **dadurch gekennzeichnet, dass** die Fensterkonstruktion einen Wärmedurchgangskoeffizienten kleiner/gleich 0,5 W/m²K, bevorzugt kleiner/gleich 0,3 W/m²K aufweist.

5. Verfahren zum Herstellen einer Fensterkonstruktion gemäss Anspruch 1, **dadurch gekennzeichnet, dass** die Armierung (12, 13) in mindestens einen Hohlraum des Fensterrahmens (1) eingeschoben wird bzw. dass die Armierung (12, 13) mit mindestens einem Rahmenprofil koextrudiert bzw. an ein solches anextrudiert wird und/oder dass das Aerogel in mindestens einen Hohlraum (14, 15) des Fensterrahmens (1) eingeblasen wird.

6. Fensterkonstruktion mit mindestens einer Isolationsplatte aus Aerogel, **dadurch gekennzeichnet, dass** das Aerogel in mindestens einer Folie vakuumverpackt ist und dass die Isolationsplatte eine Wärmeleitzahl kleiner/gleich 0,0080 W/mK, bevorzugt kleiner/gleich 0,0060 W/mK, bevorzugt kleiner/gleich 0,0045 W/mK aufweist.

7. Fensterkonstruktion gemäss Anspruch 6, **dadurch gekennzeichnet, dass** die Isolationsplatte in einem Fensterrahmen montiert ist oder dass die Isolationsplatte direkt in einer Gebäudewandung montiert ist.

8. Fensterrahmen (1) aus Metall- bzw. Kunststoffprofilen, **dadurch gekennzeichnet, dass** der Fensterrahmen (1) mindestens eine Armierung (12, 13) aus Metallschaum aufweist.

9. Verfahren zum Herstellen eines Fensterrahmens (1) gemäss Anspruch 8, **dadurch gekennzeichnet, dass** die Armierung (12, 13) in mindestens einen Hohlraum des Fensterrahmens (1) eingeschoben wird bzw. dass die Armierung (12, 13) mit mindestens einem Rahmenprofil koextrudiert bzw. an ein solches anextrudiert wird.

10. Fensterrahmen (1) aus Metall- bzw. Kunststoffprofilen, **dadurch gekennzeichnet, dass** der Fensterrahmen (1) mindestens eine Dämmung aus Aerogel aufweist.

11. Fensterrahmen (1) gemäss Anspruch 10, **dadurch gekennzeichnet, dass** die Dämmung aus Aerogel eine Wärmeleitzahl von 0,016 bis 0,020 W/mK aufweist.

12. Verfahren zum Herstellen eines Fensterrahmens (1) gemäss Anspruch 10, **dadurch gekennzeichnet, dass** das Aerogel in mindestens einen Hohlraum (14, 15) des Fensterrahmens (1) eingeblasen wird.
